# EUROPEAN PATENT APPLICATION

(11) **EP 2 829 319 A1**
(43) Date of publication of application: **28.01.2015**
(21) Application number: 13425105.7
(22) Date of filing: 23.07.2013
(51) Int. Cl.: B01J 20/22, B01J 20/26, B01J 20/28, B01J 20/30, C08G 61/10, C08G 61/12, F17C 11/00

(54) **"A porous organic polymer capable of adsorbing gas and the method of preparing thereof"**

(71) Applicant: SOL S.p.A., 20900 Monza (MB) (IT); OMB Saleri S.p.A., 25126 Brescia (IT)
(72) Inventor: Errahali, Mina, 15121 Alessandria (IT); Gatti, Giorgio, 15053 Castelnuovo Scrivia (IT); Tei, Lorenzo, 10126 Torino (IT); Cossi, Maurizio, 10126 Torino (IT); Marchese, Leonardo, 10095 Grugliasco (IT)
(74) Representative: Comoglio, Elena

(57) **Abstract**

The invention relates to a porous organic polymer capable of adsorbing gas of the general formula (II), characterized in that it comprises ultramicropores having pore size lower than 7 Angstrom (Å). The invention also relates to the method of preparing the porous organic polymer capable of adsorbing gas of formula (II) and the use of said polymer in a method of storing a gas preferably selected from the group consisting of hydrogen, methane and carbon dioxide.

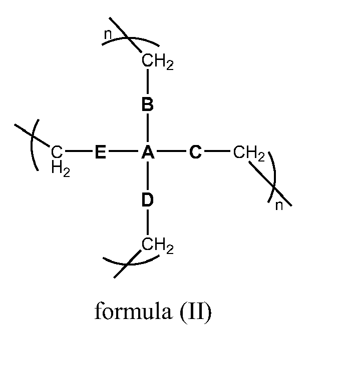

## Description

The present invention relates to a porous organic polymer capable of adsorbing gas, particularly hydrogen, methane and carbon dioxide, as well as to the method of preparing thereof and to its use for storing gas.

The continuous increase in world demand for energy which occurred during the last decades, together with concerns about climate changes arising from carbon dioxide emissions associated with the use of coal, determined an acceleration of the efforts to facilitate the development and use of new energy technologies based on alternative sources, such as natural gas and hydrogen. There is therefore a strong interest in the development of new porous materials characterized by appropriate surface area and by micrometer pore size, which would be not only useful for optimal gas storage for energy and environmental applications, but also for applications in different fields such as molecular separations and catalysis.

Organic porous polymers capable of adsorbing gas are disclosed in the prior art. For example, a microporous polymeric material capable of adsorbing carbon dioxide (CO₂), which is synthesized by cross-linking tetraphenylmethane with formaldehyde dimethyl acetal (FDA) in the presence of FeCl₃, is described in Dawson R. et al. Energy Environ. Sci., 2011, 4, 4239-4245. The crystalline polymeric material thereby obtained, which in the following will by designated as "Polymer E" - is characterized by the presence of micro-and mesopores with sizes which do not render them particularly suitable for adsorbing hydrogen and methane.

A porous polymeric material capable of adsorbing and storing both carbon dioxide (CO₂) and hydrogen (H₂) as well as methane (CH₄) is the so-called PAF-1 *(porous aromatic frameworks).* Its synthesis is described in Teng Ben et al., Angew. Chem. Int. Ed. 2009, 48, 9457-9460. Although also PAF-1 is synthesized starting from brominated tetraphenylmethane as the monomer, it chemically differs from the above-mentioned Polymer E in that its aromatic rings are directly linked with each other, while in Polymer E the aromatic rings are linked with each other through methylene groups (-CH₂-). Although PAF-1 is provided with optimal hydrogen, methane and carbon dioxide adsorbing properties as well as with a high surface area and good thermal and hydrothermal stability, it has remarkable economical and industrial disadvantages which are due to the fact that its method of synthesis is expensive and difficult to scale-up.

The present invention has the object of overcoming the drawbacks of the prior art.

In particular, one object of the present invention is to provide a porous organic polymer which, on the one hand, is capable of effectively adsorbing and storing gases such as carbon dioxide, hydrogen and methane and, on the other hand, is capable of being prepared by a method which makes use of consumer reagents and which is simple, cost-effective and easy to scale-up.

These and other objects are achieved by the method of preparing a porous organic polymer capable of adsorbing gas as defined in appended claim 1.

The scope of the present invention also includes the porous organic polymer obtainable by the method of the invention as defined in appended claim 10 as well as its use in a method of storing gas as defined in appended claim 15. The dependent claims define further features of the method and polymer of the invention and form an integral part of the description.

As it will be illustrated in more detail in the following, the porous organic polymer obtainable by the method of the invention contains a remarkable amount of ultramicropores which, thanks to their size, are particularly suitable for adsorbing and storing hydrogen and methane gases, without having a particularly high surface area. Furthermore, such polymer is obtainable by a preparation method which makes use of consumer solvents and catalysts and which therefore is neither extremely expensive nor particularly difficult to scale-up.

Further objectives, features and advantages will become apparent from the following detailed description. However, the detailed description and the specific examples, although indicating preferred embodiments of the invention, are provided by way of illustration only, since after their reading various changes and modifications which are comprised within the spirit and scope of the invention will become apparent to the person skilled in the art.

The preparation method of the invention consists essentially in a Friedel-Crafts reaction using a Friedel-Crafts catalyst, a tetrahedral monomer of general formula (I) as defined in the following, and formaldehyde dimethyl acetal (FDA) as the cross-linking agent.

An essential feature of the method of the invention is that the molar ratio of the monomer of formula (I) to FDA should be comprised within the range of from 1:9 to 1:30. The present inventors in fact observed that said molar ratio of the monomer of formula (I) to FDA unexpectedly results in a polymeric material which is provided with porosity features (in particular relating to the pore size and pore volume) which make it capable of effectively adsorbing and storing hydrogen and methane in addition to carbon dioxide. A particularly preferred value of the molar ratio of the monomer of formula (I) to FDA is of about 1:16.

The tetrahedral monomers which are employed in the preparation method of the invention have the formula (I) illustrated herein below: 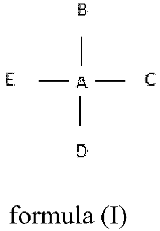 wherein A is selected from a C atom, a Si atom, a Ge atom and a 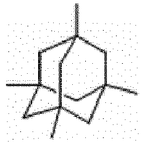 group, and wherein each of B, C, D and E is a 5-membered or 6-membered ring structure selected from the monovalent radicals of the compounds benzene, pyridine, pyran, cyclopentadiene, pyrrole, furan, tiophene, naphtalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl, alkynyl, and heteroaryl groups.

In the formula (I) illustrated above, a halogen which is preferred as an optional substituent is fluorine; preferred alkyls as optional substituents are methyl, ethy, propyls, butyls; preferred haloalkyls as optional substituents are chloromethyl, chloroethyl; preferred hydroxyalkyls as optional substituents are hydroxymethyl, hydroxyethyl; preferred aminoalkyls as optional substituents are aminomethyl, aminoethyl; preferred aryls as optional substituents are benzene, toluene, phenol, aniline, acetophenone, benzaldehyde, benzoic acid, o-xylene, m-xylene, p-xylene, benzonitrile, biphenyl; preferred alkenyls as optional substituents are ethenyl, propenyl, 1-methylethenyl, butenyl; preferred alkynyls as optional substituents are pyridine, pyran, cyclopentadyene, pyrrole, furan, thiophene.

A preferred tetrahedral monomer for use in the method of the invention is a compound of formula (I) wherein each of the ring structures A, B, C, D and E is a monovalent radical of benzene optionally having one or more substituents as defined above. A particularly preferred tetrahedral monomer is tetraphenylmethane, wherein A is a carbon atom and each of A, B, C, D and E is an unsubstituted monovalent radical of benzene, that is to say a phenyl radical.

Examples of Friedel-Crafts catalysts suitable for use in the preparation method of the invention are BF₃, BeCl₂, TiCl₄, SbCl₅, SnCl₄, FeCl₃, AlCl₃, Sc(OTf)₃, Mo(CO)₆, SeCl₄, TeCl₄, sulfuric acid, hydrofluoric acid and superacids, such as for example HF·SbF or HSO₃ F·SbF₅. The most preferred catalyst is FeCl₃.

Aprotic organic solvents suitable for use in the method of the invention include both polar and non-polar solvents. Specific examples of solvents, provided by way of illustration only, are dichloroethane, toluene, benzene, nitromethane (CH₃NO₂), carbon disulfide and chlorobenzene. The most preferred solvent is dichloroethane.

As mentioned above, the present inventors observed that by using a molar ratio of the monomer of formula (I) to FDA comprised within the range of from 1:9 to 1:30, a porous polymeric material is obtained which clearly differs from the prior art Polymer E in both the porosity and the structure, although they have the same chemical formula.

Actually, the porous organic polymer of the present invention is characterized in that it has two pore families: the ultramicropore family and the micropore or supermicropore family. Such terms are used in the present description according to the meaning given to them by the IUPAC, which has classified the pores in three main categories based on their size: the macropores, having a pore size higher than 50 nm (500 Å); the mesopores, having a pore size from 20 to 500 Å; the micropores, having a pore size lower than 20 Å. The micropores are in turn classified into two groups, i.e. the ultramicropores (lower than 7 Å) and the supermicropores (from 7 to 20 Å).

Differently from the porous organic polymer of the present invention, the prior art Polymer E is completely devoid of ultramicropores. As mentioned above, such difference is extremely important for the functionality of the porous organic polymer of the invention, in that thanks to that feature it is particularly suitable to adsorb and store gases such as hydrogen and methane.

A further difference between the porous organic polymer of the invention and the prior art Polymer E is that the former is amorphous in structure while the latter is crystalline.

A more detailed description of the structural features and the porosity of the porous organic polymer of the present invention, made with reference to the preferred embodiment thereof in which the tetrahedral monomer of formula (I) is tetraphenylmethane, is provided in the following example. The example is illustrative only and it does not limit the scope of the invention as defined in the appended claims.

### EXAMPLE

All chemicals were purchased either from Sigma Aldrich Co. or from Alfa Aesar GmbH & Co and were used without further purification unless otherwise stated.

### Synthesis with conventional heating

A porous organic polymer capable of adsorbing gas falling within the scope of the present invention, wherein the tetrahedral monomer of formula (I) is tetraphenylmethane, was synthesized as follows.

Ferric chloride (14.54 g, 0.09 mol) and tetraphenylmethane (TPM, 3.59 g, 0.011 mol) were suspended in dichloroethane (DCE, 240 mL). The resulting mixture was vigorously stirred at room temperature to obtain a clear solution, then formaldehyde dimethylacetal (FDA, 6.88 g, 8 mL, 0.09 mol) was added dropwise. The resulting thick gel was stirred at room temperature for 4 hours and then heated to reflux for 17 hours. After cooling to room temperature, the gel was diluted with methanol and washed several times with water until the pH become neutral, and finally dried in an oven at 100 °C overnight. The polymer thereby obtained is designated as "UPO-1".

The same synthesis procedure was also performed with TPM:FDA ratios of 1:9 and 1:30, varying the FeCl₃:FDA ratio from 1:10 to 2:1.

The synthesis of the UPO-1 polymer was also performed by using unconventional heating methods, i.e. microwave synthesis, autoclave synthesis, and ultrasonic synthesis.

### Microwave synthesis

The same amounts of ferric chloride and tetraphenylmethane in dichloroethane as indicated above were put into a schlenk. The mixture was stirred for 4 minutes and the FDA was added over 4 minutes. Then, the mixture was stirred for 2 minutes, after which the schlenk was put into a microwave oven (80W power) and the reaction was started with stirring and cooling in order to maintain a constant temperature of 80°C. The reaction time was of 60 minutes. Washing was performed as described in the previous paragraph concerning the conventional synthesis in an oven.

Equivalent results were obtained by varying the reaction conditions within the ranges indicated below:
Power: 1-300 W
Temperature: 25-150°C
Time prior to ramp temperature: 1-120 minutes
Reaction time: 1-240 minutes

### Autoclave synthesis

The same amounts of ferric chloride and tetraphenylmethane in dichloroethane and FDA as indicated above were put into a autoclave under the following conditions: temperature = 120 °C; autogenic pressure; reaction time: 6 hours. The reaction was carried out both with and without a stirring system.

Equivalent results were obtained by varying the reaction conditions within the ranges indicated below:
Temperature: 10-240°C
Time: 30 minutes - 7 days

As an alternative, FDA can be progressively added over 1-120 minutes to the TPM, FeCl₃ and DCE mixture in autoclave. The reaction is carried out under the same reaction conditions as indicated above.

### Ultrasonic synthesis

The same amounts of ferric chloride and tetraphenylmethane in dichloroethane as indicated above were put into a flask. The mixture was stirred for 15 minutes and FDA was added over 15 minutes. The resulting mixture was stirred for 4 hours. These stirring times can be varied between 1 and 120 minutes and between 1 minute and 12 hours after the addition of FDA. In order to start the reaction, the flask was placed in a ultrasonic bath or sonicated with a ultrasonic immersion probe and the following reaction conditions were applied: 60 W potency, 40 KHz frequency, 80 °C temperature, 60 minutes reaction time. Washing was performed as described previously.

Equivalent results were obtained by varying the reaction conditions within the ranges indicated below:
Power: 20-150 W
Frequency: 5-60 KHz
Temperature: 25-150°C
Reaction time: 1-360 minutes

### Characterization methodologies

N₂ physisorption measurements were carried out at 77K in the relative pressure range from 1 x 10⁻⁷ to 1 P/P₀ by using a Quantachrome Autosorb1MP/TCD instrument. Prior to analysis, the samples were outgassed at 150 °C for 16 hours (residual pressure lower than 10⁻⁶ Torr). Specific surface areas were determined using the Brunauer-Emmett-Teller (BET) equation, in the relative pressure range from 0.05 to 0.15 P/P₀. Pore size distributions were obtained by applying the NLDFT method at the equilibrium and using a carbon kernel based on a slit pore model.

Solid-state NMR spectra were acquired on a Bruker Advance III 500 spectrometer equipped with a wide bore 11.7 Tesla magnet and operating at 125.75 MHz for ¹³C and at 500.13 MHz for ¹H. ¹H-¹³C cross polarization magic angle spinning (CP-MAS) experiments were carried out.

Adsorption/desorption of methane were performed between 0 and 10 atm at 273 K with a Micrometrics ASAP 2050 - Xtended Pressure instrument.

Adsorption/desorption of hydrogen were performed between 0 and 100 atm at 77 K with a Gas Reaction Controller-PCI Unit instrument (Advanced Materials Corporation).

X-ray diffractograms (XRD) were recorded on unoriented ground powders with a Thermo ARL 'XTRA-048 diffractometer with a Cu Ka (k = 1.54 A °) radiation.

Thermogravimetic analyses were performed on a Setaram SETSYS Evolution instrument under argon (gas flow 20 mL/ min), heating the samples up to 1173 K with a rate of 5 K/min.

SEM images at different magnification were recorded on a Quanta 200 FEI Scanning Electron Microscope equipped with EDAX EDS attachment, using a tungsten filament as the electron source at 20 KeV.

### Comparative results

By comparing the characterization data of Polymer E which are reported in Dawson R. et al. Energy Environ. Sci., 2011, 4, 4239-4245 with the characterizations made by the present inventors on the UPO-1 polymer, the following differences which relate to both the porosity and the structure of the materials were detected.

First, UPO-1 is characterized in that it has different pore families (which are the most valued for H₂ and CH₄ storage): the ultramicropore family at 5.5 Å, which is totally absent from Polymer E, and the 8, 12 and 16 Å micropore families, which in Polymer E are shifted at 10, 17 and 22 Å. Furthermore, the quantity of ultramicropores and micropores is different: UPO-1 has a differential ultramicropore volume of about 2,8 cm³/g; a differential 8 Å micropore volume of about 0.7 cm³/g; a differential 12 Å micropore volume of about 1.6 cm³/g; a differential 16 Å micropore volume of about 1 cm³/g. Instead, Polymer E is characterized by a maximum of 0.9 cm³/g for the 10 Å micropores and of 1,1 cm³/g for the 17 Å micropores.

**Table 1. Comparison between the differential pore volume of various pore families in UPO-1 and Polymer E.**

| **Polymer** | **Ultramicropore differential volume (cm³/g)** | **Micropore differential volume (cm³/g)** | | | | |
|---|---|---|---|---|---|---|
| | 5.5Å | 8 Å | 10 Å | 12 Å | 16 Å | 17 Å |
| **UPO-1** | 2.8 | 0.7 | -- | 1.6 | 1 | -- |
| **Polymer E** | -- | -- | 0.9 | -- | -- | 1.1 |

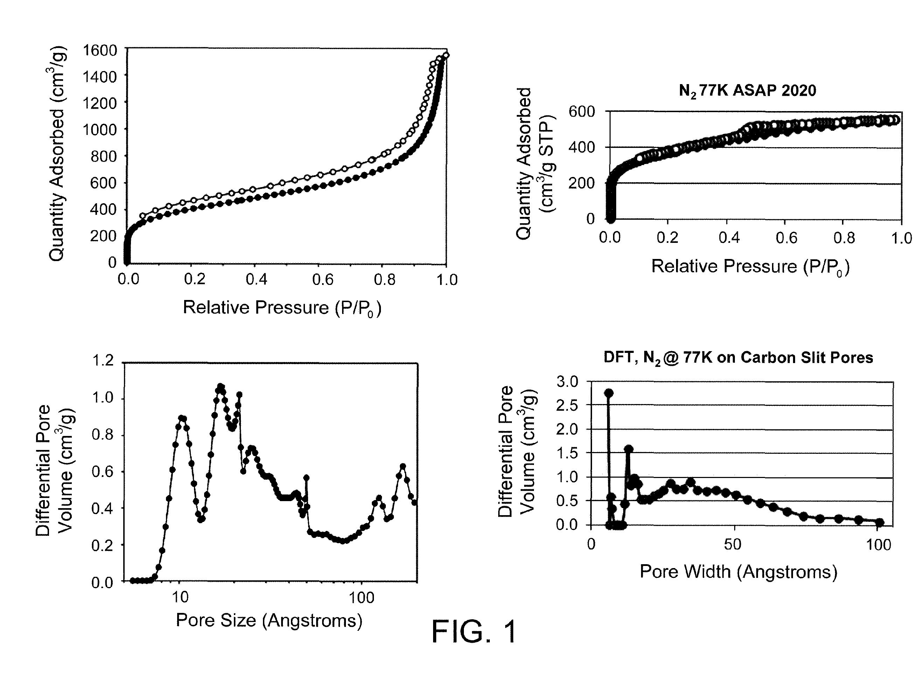

The different pore size distribution and the different N₂ adsorption/desorption properties are illustrated in figure 1. The upper panels show the N₂ adsorption/desorption isotherms at 77K, and the lower panels show the pore size NL-DFT distributions, with reference to both the prior art Polymer E (left) and the UPO-1 polymer of the invention (right).

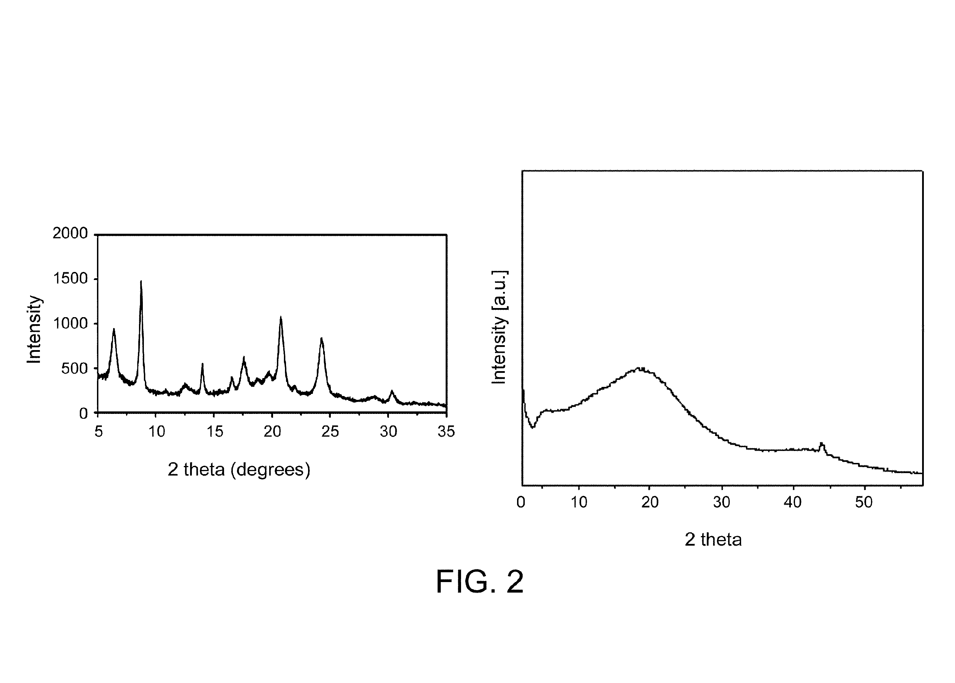

Another characterization which clearly distinguishes the UPO-1 polymer from Polymer E is the X-ray powder diffraction (XRD) analysis. The XRD data indicate that UPO-1 is totally amorphous (figure 2, right panel), while Polymer E has a crystalline structure (figure 2, left panel).

### CH₄ and H₂ storage: comparison between UPO-1 and PAF-1

The two tables which are provided herein below show the comparison between the hydrogen and methane storage abilities of the UPO-1 polymer of the present invention and one of the prior art polymers having the highest surface area, i.e. the PAF-1 polymer, in which the aromatic rings of tetraphenylmethane are directly linked with each other.

**Table 2. Comparison between the H₂ storage ability of UPO-1 and PAF-1 at high pressures**

| **Polymer** | **SSA (m²/g)** | **T (K)** | **P (bar)** | **Wt%** | **Kg/L** |
|---|---|---|---|---|---|
| **UPO-1 (d= 0.6 g/mL)** | 1320 | 77 | 48 | 4.08 | 0.0245 |
| **PAF-1 (d= 0.3 g/mL)** | 5600 | 77 | 48 | 10.70 | 0.0321 |

The data relating to PAF-1 reported in Table 2 are taken from Teng Ben et al., Angew. Chem. Int. Ed. 2009, 48, 9457 -9460.

**Table 3. Comparison between the CH₄ storage ability of UPO-1 and PAF-1 at low pressures**

| **Polymer** | **SSA (m²/g)** | **T (K)** | **P (atm)** | **cm³/g** | **Kg/L** |
|---|---|---|---|---|---|
| **UPO-1 (d= 0.6 g/mL)** | 1321 | 273 | 1 | 21.7 | 0.0092 |
| **PAF-1 (d= 0.3 g/mL)** | 5460 | 273 | 1 | 18 | 0.0038 |

The data relating to PAF-1 reported in Table 2 are taken from Teng Ben et al. Energy Environ. Sci. 2011, 4, 3991-3999.

The two tables show that UPO-1 has a high pressure hydrogen storage ability and low pressure methane storage ability which are substantially comparable to those of PAF-1. This is an unexpected result, in that the surface area (SSA) of UPO-1 is 1321 m²/g while the surface area of PAF-1 is 5600 m²/g.

**Table 4. H₂ and CH₄ storage ability of UPO-1 at high pressures and room temperature (for H₂ also a 77 K).**

| | **T (K)** | **P [bar]** | **Wt%** | **Kg/L** |
|---|---|---|---|---|
| H₂ | 298 | 100 | 1.5 | 0.0090 |
| H₂ | 77 | 100 | 6.0 | 0.0360 |
| CH₄ | 298 | 100 | 18.65 | 0.1119 |

These data cannot be compared with PAF-1 because of the absence of corresponding values at these temperature and pressure conditions. The values obtained with UPO-1 confirm its high H₂ and CH₄ storage ability also at room temperature.

## Claims

1. A method of preparing a porous organic polymer capable of adsorbing gas, comprising reacting a monomer of formula (I): 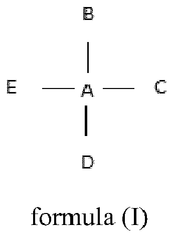 wherein A is selected from a C atom, a Si atom, a Ge atom
and a 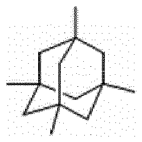 group,
and wherein each of B, C, D and E is a 5-membered or 6-membered ring structure selected from the monovalent radicals of the compounds benzene, pyridine, pyran, cyclopentadiene, pyrrole, furan, tiophene and naphtalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl, alkynyl, and heteroaryl groups,
with a Friedel-Crafts catalyst in an aprotic organic solvent and with formaldehyde dimethyl acetal (FDA), **characterized in that** the monomer of formula(I):FDA molar ratio is comprised within the range of 1:9 to 1:30, preferably is of about 1:16.

2. The method according to claim 1, wherein the Friedel-Crafts catalyst is selected from the group consisting of BF₃, BeCl₂, TiCl₄, SbCl₅, SnCl₄, FeCl₃, AlCl₃, Sc(OTf)₃, Mo(CO)₆, SeCl₄, TeCl₄, sulfuric acid, hydrofluoric acid and super acids.

3. The method according to claim 1 or 2, wherein the aprotic organic solvent is selected from the group consisting of dichloroethane (DCE), toluene, benzene, nitromethane (CH₃NO₂), carbon disulfide and chlorobenzene.

4. The method according to any of claims 1 to 3, wherein each of B, C, D and E in formula (I) is a monovalent radical of benzene optionally bearing one or more substituents from nitro, amino, hydroxyl, sulfonyl, halogen, phenyl, alkyl, haloalkyl, hydroxyalkyl, aminoalkyl, aryl, alkenyl, alkynyl, and heteroaryl groups.

5. The method according to any of claims 1 to 4, wherein the monomer of formula (I) is first reacted with the Friedel-Crafts catalyst in the aprotic organic solvent and then FDA is added.

6. The method according to claim 5, comprising the following steps after the addition of FDA:
(i) stirring the reaction mixture at about room temperature for at least 20 minutes;
(ii) heating the reaction mixture at a temperature comprised between 30°C and reflux temperature and stirring for 12 to 48 hours;
(iii) cooling the reaction mixture at about room temperature and diluting with a solvent selected from the group consisting of methanol, ethanol, isopropanol, water and dichloroethane; and
(iv) washing with water until the pH becomes neutral and drying.

7. The method according to any of claims 1 to 6, wherein the catalyst is FeCl₃.

8. The method according to any of claims 1 to 7, wherein the aprotic organic solvent is dichloroethane (DCE).

9. The method according to any of claims 1 to 8, wherein the monomer of formula (I) is tetraphenylmethane.

10. A porous organic polymer capable of adsorbing gas having the general formula (II): 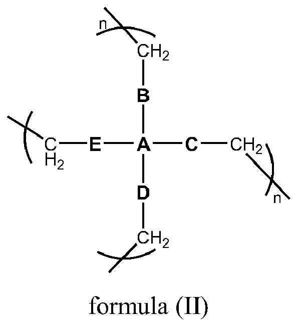 wherein A, B, C, D and E are as defined in claim 1 and n is a integer, **characterized in that** it comprises ultramicropores having pore size lower than 7 Angstrom (Å).

11. The porous organic polymer capable of adsorbing gas according to claim 10, wherein A is a carbon atom and each of B, C, D and E is a monovalent radical of benzene.

12. The porous organic polymer capable of adsorbing gas according to claim 10 or 11, comprising a porous volume of ultramicropores of 0.5 to 3 cm³/g, the ultramicropores having pore size lower than 7 Angstrom (Å).

13. The porous organic polymer capable of adsorbing gas according to any of claims 10 to 12, further comprising micropores having pore sizes of about 8, 12 and 16 Angstrom (Å).

14. The porous organic polymer capable of adsorbing gas according to any of claims 10 to 13, which is obtainable by the method according to any of claims 1 to 9.

15. A method of storing a gas preferably selected from hydrogen, methane and carbon dioxide, **characterized in that** the gas is stored using a porous organic polymer capable of adsorbing gas according to any of claims 10 to 14.
